# FASCICULE DE BREVET EUROPEEN

(11) **EP 3 575 802 B1**
(45) Date de publication et mention de la délivrance du brevet: **27.07.2022**
(21) Numéro de dépôt: 18175594.3
(22) Date de dépôt: 01.06.2018
(51) Int. Cl.: G01P 3/487, G01C 22/00, G01C 22/02

(54) **PROCEDE ET SYSTEME DE MESURE D'UNE VITESSE ET/OU D'UNE DISTANCE PARCOURUE PAR UN VELO**
VERFAHREN UND SYSTEM ZUM MESSEN EINER GESCHWINDIGKEIT UND/ODER EINER VON EINEM FAHRRAD ZURÜCKGELEGTEN DISTANZ
METHOD AND SYSTEM FOR MEASURING SPEED AND/OR A DISTANCE TRAVELLED BY A BICYCLE

(43) Date de publication de la demande: 04.12.2019
(73) Titulaire: The Swatch Group Research and Development Ltd, 2074 Marin (CH)
(72) Inventeur: Casagrande, Arnaud, 2014 Bôle (CH)
(74) Mandataire: ICB SA

(56) Documents cités:
- EP-A1- 3 173 796
- EP-A2- 0 679 868
- DE-A1- 3 034 442
- DE-A1- 19 838 876
- DE-C1- 19 923 452
- DE-U1- 29 615 910
- DE-U1-202012 011 461

## Description

### DOMAINE TECHNIQUE DE L'INVENTION

L'invention concerne un procédé de mesure d'une vitesse et/ou d'une distance parcourue par un véhicule à au moins une roue, tel qu'un vélo.

L'invention concerne également un système de mesure d'une vitesse et/ou d'une distance parcourue par un véhicule à au moins une roue, tel qu'un vélo pour la mise en oeuvre du procédé de mesure.

### ETAT DE LA TECHNIQUE

Pour effectuer une mesure d'une vitesse d'un véhicule ayant par exemple deux roues, il peut être utilisé un tachymètre du type Bluetooth, qui est généralement muni d'une batterie pour son alimentation électrique. Il est aussi connu d'utiliser un dispositif de mesure de vitesse avec au moins un aimant permanent disposé sur une roue du véhicule et un capteur magnétique fixé par exemple sur une fourche du véhicule pour déterminer le passage de l'aimant en regard du capteur lors de la rotation de la roue du véhicule. Il est généralement nécessaire de munir un tel dispositif de mesure de vitesse d'une source d'énergie spécifique, ce qui complique la structure du dispositif à placer sur la roue du véhicule et la manière d'effectuer la mesure de vitesse.

Le brevet US 5,335,188 décrit un dispositif pour gérer et comparer des performances idéales, passées et présentes sur une machine d'exercice, telle qu'un vélo. Pour ce faire, il est prévu au moins un aimant permanent lié à la roue de vélo, et un capteur de mouvement sur la fourche de vélo pour transmettre des signaux de mesure par câble à une unité à microprocesseur disposée sur le guidon de vélo. Une batterie est prévue pour l'alimentation du dispositif. Le capteur de mouvement peut détecter le passage de l'aimant permanent lors de la rotation de la roue. Ce capteur de mouvement agit comme un capteur magnétique pour déterminer la vitesse de rotation de la roue au passage de l'aimant à proximité dudit capteur et en déduire la distance parcourue. Comme précédemment mentionné, il doit être utilisé une source d'énergie, telle qu'une batterie pour le fonctionnement du dispositif de mesure, ce qui complique la structure du dispositif à placer sur le vélo pour effectuer la mesure de vitesse.

La demande de brevet US 2015/0285657 A1 décrit un dispositif de gestion d'activité et d'enregistrement d'un vélo. Il est prévu au moins un aimant disposé sur les rayons d'une roue de vélo, une unité de contrôle montée sur une fourche de vélo, et un smartphone placé sur le guidon du vélo. L'unité de contrôle comprend notamment un capteur à effet Hall pour déterminer le passage de l'aimant lors de la rotation de la roue de vélo, un microprocesseur avec un logiciel propriétaire identique au logiciel du smartphone, une mémoire pour mémoriser toutes les mesures effectuées par le ou les capteurs. Le dispositif permet de mesurer la vitesse du vélo et la distance parcourue. Cependant une source d'énergie doit être prévue pour l'unité de contrôle, ce qui complique la structure du dispositif à placer sur le vélo pour effectuer la mesure de vitesse.

La demande de brevet DE 198 38 876 A1 décrit un tachymètre électronique placé sur une roue qui est alimenté par le passage d'un aimant devant une bobine d'induction pour charger un condensateur. La bobine d'induction du circuit de mesure détecte des variations de tension induite au passage de l'aimant pour déterminer une vitesse de roue. Une transmission de données sans fil est effectuée vers une unité d'évaluation.

Un circuit est utilisé pour redresser la tension générée, et un condensateur est utilisé pour stocker la tension redressée et pour alimenter un circuit de mesure.

La demande de brevet DE 20 2012 011461 U1 décrit un dispositif de détection de vitesse et du kilométrage d'une bicyclette via une dynamo à moyeu. Un circuit de traitement génère un train d'impulsions suite à la tension induite de la dynamo, et pour prélever une tension d'alimentation du dispositif. Une unité de traitement permet l'acquisition temporelle de différentes valeurs lors de l'utilisation de la bicyclette. Une unité de transmission transmet les données à au moins un récepteur portable.

La demande de brevet DE 30 34 442 A1 décrit un dispositif de mesure et d'indication pour déterminer une vitesse d'un véhicule. Un ou plusieurs aimants permanents sont disposés sur des roues, et des signaux électriques sont générés au passage des aimants devant chaque circuit capteur, qui comprend une unité d'évaluation.

La demande de brevet EP 3 173 796 A1 décrit un système à capteurs monté sur une bicyclette ayant un aimant fixé en périphérie ou sur une roue. Un circuit capteur sur le cadre détecte le passage des aimants et une détermination de vitesse distance est effectuée par le circuit. Les données peuvent être transmises à un dispositif portable.

Les demandes de brevet DE 296 15 910 U1 et DE 199 23 452 C1 décrivent un taximètre sur un vélo pour indiquer la distance et vitesse du vélo, voire de patins à roulettes. Des aimants sont agencés sur les roues et un circuit capteur détecte leur passage. Une communication de données par Bluetooth vers un dispositif portable est effectuée.

La demande de brevet EP 0 679 868 A2 décrit un capteur de position avec un circuit de traitement de données et une mémorisation des mesures effectuées.

### RESUMÉ DE L'INVENTION

L'invention a donc pour but de pallier les inconvénients cités ci-dessus pour simplifier la mesure de vitesse et/ou de distance parcourue d'un véhicule en fournissant avec un minimum d'énergie électrique l'information de la vitesse et/ou de la distance parcourue par transmission sans fil à un dispositif portable.

A cet effet, l'invention concerne un procédé de mesure d'une vitesse et/ou d'une distance parcourue par un vélo, qui comprend les caractéristiques des revendications indépendantes 1 ou 2.

Des étapes particulières du procédé de mesure sont définies dans les revendications dépendantes 3 à 14.

Un avantage du procédé de mesure selon l'invention réside dans le fait qu'au moins un aimant permanent est disposé sur une roue, par exemple sur un rayon d'une roue du vélo, et qu'un circuit de mesure à capteur magnétique est monté sur une fourche du vélo pour que l'aimant puisse passer à proximité du capteur magnétique lors de la rotation de la roue. Ainsi, une récupération d'énergie, lors du passage de l'aimant devant le capteur magnétique, est effectuée dans le circuit de mesure avec un redresseur et un condensateur de lissage. L'énergie récupérée permet d'alimenter les composants électroniques du circuit de mesure.

A chaque détection du passage de l'aimant devant le capteur magnétique, une mesure de la vitesse du véhicule, tel qu'un vélo, peut être facilement effectuée dans une unité de calcul du circuit de mesure, cadencée par un oscillateur. Une transmission directe par un signal radiofréquence, par exemple Bluetooth (BLE), de la mesure effectuée peut être faite depuis le circuit de mesure pour être reçue par un dispositif portable porté par l'utilisateur du véhicule ou disposé sur le guidon du véhicule. Ce dispositif portable peut être un téléphone portable ou une oreillette pour fournir un signal audio à l'utilisateur ou une tablette électronique placée sur le guidon afin d'afficher au moins la vitesse du vélo, et une distance parcourue par intégration de la mesure de vitesse.

Avantageusement, au moins deux aimants permanents sont disposés par exemple chacun sur un rayon respectif de la roue avant du vélo et de préférence à 180° l'un de l'autre. Cela permet de récupérer plus d'énergie déjà lors d'une rotation complète de la roue de vélo et permettre la mesure de vitesse et/ou de distance parcourue par le vélo. Une calibration du diamètre de la roue de vélo et de l'angle de fixation du circuit de mesure peut être effectuée initialement par une transmission depuis le dispositif portable vers le circuit de mesure. Une mémorisation de ces données dans le circuit de mesure permet lors de la mise en fonction du système de mesure de mesurer la vitesse du vélo au moins après un tour complet de la roue de vélo, et par la suite la distance parcourue.

Alternativement, l'ensemble des calculs et des calibrations peut être opéré et stocké dans le dispositif portable. Dans ce cas de figure, le circuit de mesure est encore avantageusement simplifié et ne transmet que les impulsions de passage de roue dans le temps, et le total de ces impulsions, et éventuellement l'angle brut d'inclinaison du capteur. La calibration est prise en charge par le dispositif portable en roulant par exemple sur un parcours mesuré ou en entrant des valeurs d'inclinaison et de diamètre mesurées.

Au moyen du circuit de mesure, il est possible par la succession d'impulsions de tension induite dans le temps fourni par le capteur magnétique, de calculer une vitesse instantanée, une vitesse maximale sur une période de temps déterminée et une vitesse moyenne dans l'unité de calcul. De plus par intégration dans l'unité de calcul, il peut facilement être déterminé la distance parcourue pendant une période de temps déterminée. Toutes les mesures peuvent être mémorisées pour pouvoir être transmises sur requête et en fonction du niveau de tension d'alimentation du circuit de mesure suite à la récupération d'énergie du passage du ou des aimants en regard du capteur magnétique.

A cet effet, l'invention concerne également un système de mesure d'une vitesse et/ou d'une distance parcourue par un véhicule à au moins une roue, tel qu'un vélo pour la mise en oeuvre du procédé de mesure, qui comprend les caractéristiques mentionnées dans les revendications indépendantes 15 et 16.

Des formes d'exécution particulières du système de mesure sont définies dans les revendications dépendantes 17 à 19.

### BRÈVE DESCRIPTION DES FIGURES

Les buts, avantages et caractéristiques d'un procédé et système de mesure d'une vitesse et/ou d'une distance parcourue par un véhicule à au moins une roue, apparaîtront mieux dans la description suivante sur la base d'au moins une forme d'exécution non limitative illustrée par les dessins sur lesquels :
- la figure 1 est une vue de côté d'un véhicule par exemple à deux roues, tel qu'un vélo muni du système de mesure de vitesse et/ou de distance parcourue selon l'invention, et

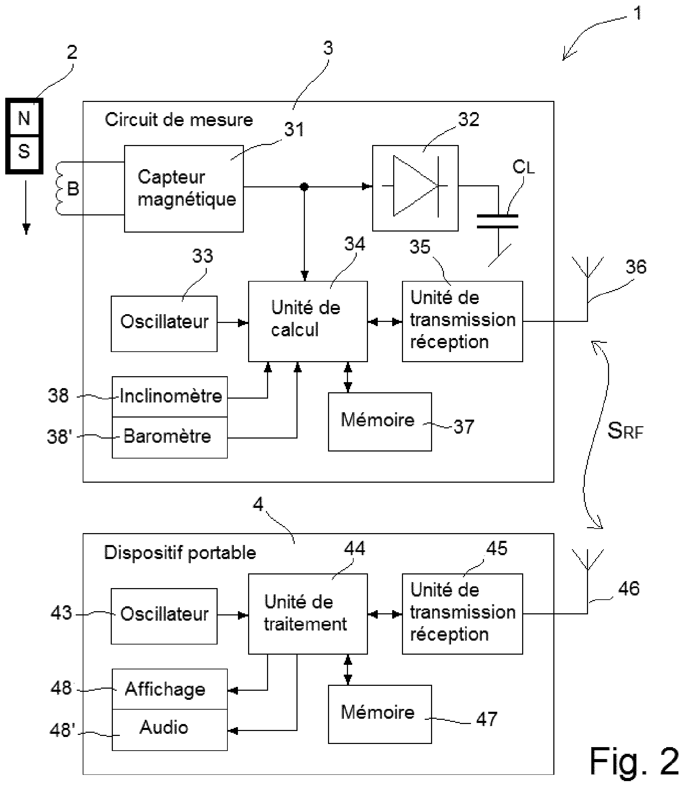

- la figure 2 représente un schéma bloc simplifié des composants électroniques du système de mesure de vitesse et/ou de distance parcourue du véhicule à deux roues selon l'invention.

### DESCRIPTION DETAILLEE DE L'INVENTION

Dans la description suivante, il est fait référence à un procédé et un système de mesure d'une vitesse et/ou d'une distance parcourue par un véhicule à au moins une roue. Tous les composants électroniques, qui sont bien connus d'un homme du métier dans ce domaine technique, ne sont décrits que de manière simplifiée. Le véhicule peut être par exemple un vélo à deux roues de manière à être mis en mouvement par un utilisateur sur un chemin, par exemple sur un chemin routier ou en forêt.

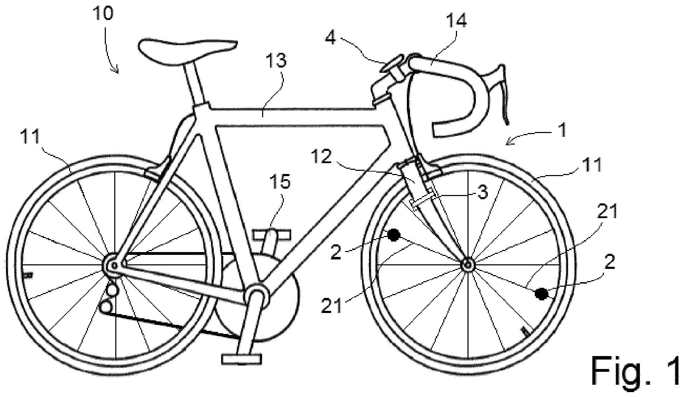

La figure 1 représente une vue de côté d'un vélo 10 à deux roues 11. La roue avant 11 est montée libre de rotation à une extrémité d'une fourche avant 12. Cette fourche avant 12 est montée dans une portion avant du cadre 13 de vélo pour pouvoir tourner la roue avant 11 du vélo. La fourche 12 est reliée à une autre extrémité à un guidon 14. Un pédalier 15 actionnable par les deux pieds d'un utilisateur est prévu en liaison avec une chaîne pour entraîner la roue arrière 11 en rotation sur une portion arrière du cadre 13.

Un système de mesure 1 est également monté sur le vélo 10 pour la mesure d'une vitesse et/ou d'une distance parcourue du vélo en utilisation. Le système de mesure 1 comprend essentiellement au moins un aimant permanent 2 placé sur une roue 11, et un circuit de mesure 3 placé sur une portion arrière du cadre 13 ou sur une fourche avant 12. De préférence, l'aimant permanent 2 est monté sur un rayon 21 de la roue avant 11, et un circuit de mesure 3 est placé sur la fourche avant 12.

Le système de mesure 1 peut encore comprendre au moins un dispositif portable 4 pour recevoir des informations de mesure de vitesse et/ou de distance parcourue par le vélo depuis le circuit de mesure 3. De préférence, l'aimant permanent 2 est placé sur un rayon 21 proche de la périphérie de la roue avant 11 ou sur sa jante. Le circuit de mesure 3 est disposé sur la fourche avant 12 à une même distance de l'axe de rotation de la roue avant 11 que l'aimant permanent 2 pour être en regard de l'aimant permanent 2 à son passage lors de la rotation de la roue avant 11. Il peut aussi être prévu plusieurs aimants permanents 2 placés chacun sur un rayon 21 respectif de la roue avant 11 par exemple deux aimants permanents 2 disposés à 180° l'un de l'autre et à même distance de l'axe de rotation de la roue avant 11.

Le circuit de mesure 3 comprend principalement un capteur magnétique 31 pour capter le passage du ou des aimants permanents 2 notamment par une bobine B, un redresseur à au moins une diode 32 pour redresser la tension induite captée par la bobine B du capteur magnétique 31, et un condensateur de lissage C_{L} pour stocker l'énergie récupérée à la suite du redresseur 32. L'énergie récupérée et stockée sur le condensateur de lissage C_{L} permet de fournir une alimentation électrique aux composants électroniques du circuit de mesure 3.

Le circuit de mesure 3 comprend encore essentiellement une unité de calcul 34 liée directement en sortie du capteur magnétique 31 pour effectuer le calcul de la vitesse et/ou de la distance parcourue du vélo en utilisation. L'unité de calcul 34, qui peut être un processeur, est cadencée par un oscillateur 33, qui peut être un oscillateur à quartz horloger ou MEMS. Chaque impulsion magnétique de passage du ou des aimants permanents 2 à proximité du capteur magnétique 31, et selon une cadence dans le temps générée par l'oscillateur 33, permet à l'unité de calcul 34 de calculer facilement la vitesse. De plus, il est possible d'obtenir aussi facilement la distance parcourue par intégration.

Il peut être envisagé de calculer dans l'unité de calcul 34 une vitesse instantanée, une vitesse maximale sur une période de temps déterminée et une vitesse moyenne. Une distance parcourue par le vélo peut aussi être déterminée dans l'unité de calcul 34 sur une période de temps déterminée.

Les mesures effectuées peuvent être transmises par une antenne 36 d'une unité de transmission-réception 35 reliée en sortie de l'unité de calcul 34, à un dispositif portable 4. L'unité de transmission-réception 35 peut être du type BLE en mode annonce ou publicitaire (« advertising » en terminologie anglaise) pour transmettre des signaux radiofréquences S_{RF} à faible distance au dispositif portable 4. Ce dispositif portable 4 peut être un téléphone portable monté sur le guidon du vélo, ou une tablette électronique, voire aussi une oreillette électronique pour signaler les mesures sous forme audio à l'utilisateur.

Dans une variante de réalisation, l'unité de calcul 34 du circuit de mesure 3 peut être prévue pour déterminer des temps de passage de l'aimant permanent 2 en regard du capteur magnétique 31 sur la base des impulsions de tension induite fournies par le capteur magnétique 31. Ensuite, l'unité de transmission-réception 35 du circuit de mesure 3 transmet par l'antenne 36 des données relatives aux temps de passage de l'aimant permanent 2 en regard du capteur magnétique 31 au dispositif portable 4. Un calcul d'une vitesse et/ou d'une distance parcourue du véhicule est effectué directement dans une unité de traitement 44 du dispositif portable 4.

Cette vitesse v du vélo est donc obtenue en connaissant le temps t entre deux pointes de tension induite s'il n'y a qu'un seul aimant permanent 2 et la dimension de la roue de vélo avec un diamètre D. Cela donne v = π·D/t. Avec deux aimants permanents 2 à 180° l'un de l'autre, la vitesse est donc v = π·D/(2·t).

Bien entendu, pour le calcul exact de la vitesse du vélo, le diamètre D de la roue avant 11 et éventuellement l'angle d'inclinaison du circuit de mesure 3 avec le capteur magnétique 31 par rapport à l'horizontale doivent être intrinsèquement calibrés par l'utilisateur du vélo notamment par l'intermédiaire du dispositif portable 4 expliqué ci-après.

Il est à noter que le circuit de mesure 3 peut comprendre une mémoire 37 reliée à l'unité de calcul 34 pour mémoriser les mesures de vitesse et de distance parcourue dans le temps. Il peut s'agir d'une mémoire non volatile du type FLASH pour garder en mémoire les données en cas de coupure d'alimentation, notamment quand le vélo est à l'arrêt ou que la tension stockée sur le condensateur de lissage C_{L} n'est plus suffisante.

Le circuit de mesure 3 peut encore comporter d'autres capteurs. Il peut être prévu un inclinomètre 38 pour permettre par intégration de calculer dans l'unité de calcul 34, le dénivelé effectué par le vélo en utilisation, ou une inclinaison latérale instantanée du vélo. Les données mesurées du dénivelé positif et du dénivelé négatif sont mémorisées dans la mémoire non volatile 37, tout comme la vitesse et la distance parcourue. Un baromètre 38' ou altimètre peut être aussi prévu pour mesurer la pression atmosphérique. Ces capteurs peuvent être utiles dans la pratique de certains sports de descente. L'inclinomètre 38 combiné au baromètre 38' peuvent être calibrés par l'intermédiaire du dispositif portable 4 en communication avec le circuit de mesure 3.

Quand le vélo s'arrête ou roule à trop faible vitesse, il est prévu de désactiver l'unité de transmission-réception 35 si la tension d'alimentation depuis le condensateur de lissage C_{L} descend en dessous d'un premier seuil de tension. Lorsque cette tension d'alimentation descend encore plus bas au-dessous d'un second seuil critique de tension, tout le circuit de mesure 3 est désactivé en ayant mémorisé au préalable toutes les données de mesure dans la mémoire non volatile 37. Ainsi, ces données mémorisées peuvent être à nouveau disponibles pour être transmises au dispositif portable 4 lorsque la tension d'alimentation est suffisante au-dessus du premier seuil bas de tension avec le vélo en utilisation.

Bien entendu pour avoir une tension suffisante de fonctionnement de tout le circuit de mesure 3 même avec une faible vitesse, cela dépend du dimensionnement de la bobine B du capteur magnétique 31 avec un nombre de spires déterminé et de la force du champ magnétique généré par le ou les aimants permanents 2. La distance entre le ou les aimants permanents 2 au passage du capteur magnétique 31 doit être la plus faible possible. Avec deux aimants permanents 2 disposés à 180° l'un de l'autre, il peut suffire d'une vitesse du vélo juste supérieure par exemple à 1 km/h pour un stockage d'énergie adéquat sur le condensateur de lissage C_{L}.

Le dispositif portable 4 peut être comme expliqué ci-dessus, un téléphone portable porté par l'utilisateur du vélo ou fixé sur une portion du vélo par exemple sur le guidon du vélo. Il peut s'agir aussi d'une tablette électronique aussi fixée sur le guidon du vélo, ou une oreillette électronique portée à l'oreille par l'utilisateur pour signaler les mesures de vitesse et de distance parcourue par un signal audio.

Le dispositif portable 4 comprend une unité de transmission-réception 45 pour établir une communication de signaux S_{RF} par une antenne 46 avec le circuit de mesure 3. Le dispositif portable 4 comprend encore un oscillateur 43, qui peut aussi être un oscillateur à quartz horloger ou autre, pour cadencer une unité de traitement de données 44 reliée à l'unité de transmission-réception 45. Une mémoire non volatile 47 permet de mémoriser les informations de mesures reçues du circuit de mesure ou calculées dans le dispositif portable 4, et de fournir des données de paramétrage ou de calibration à l'unité de traitement pour une transmission au circuit de mesure 3 par l'unité de transmission-réception 45. Il peut encore être prévu au moins un élément d'affichage 48 par exemple à cristaux liquides ou LED pour signaler à l'utilisateur la vitesse du vélo et la distance parcourue lors de la réception des signaux S_{RF} du circuit de mesure 3.

Dans le cas d'un dispositif portable 4 sous la forme d'une oreillette électronique, un élément audio 48' tel qu'un haut-parleur peut être prévu. Il peut donc y avoir aussi bien l'élément audio 48' et l'élément d'affichage 48 pour le dispositif portable 4 sous la forme du téléphone portable ou de la tablette électronique. Ainsi une information de mesures effectuées par le circuit de mesure 3 peut être fournie à l'utilisateur sous forme audio à l'aide d'une synthèse vocale.

Il est encore à noter que comme la distance entre le dispositif portable 4 fixé sur le guidon et le circuit de mesure 3 est faible, il est possible de diminuer fortement la puissance du signal S_{RF} BLE. Cela permet ainsi d'augmenter la durée de fonctionnement du circuit de mesure 3 lorsque le vélo est un moment à l'arrêt.

Le capteur magnétique 31 du circuit de mesure peut n'être constitué de manière simplifiée que par la bobine à plusieurs spires reliée à l'unité de calcul 34. De plus, il peut être prévu deux capteurs magnétiques 31 positionnés par exemple à un même endroit de la fourche avant. Cela permet d'assurer le bon fonctionnement d'au moins un des deux capteurs magnétiques 31 pour la mesure précise de la vitesse et de la distance parcourue dans le circuit de mesure 3. Le capteur magnétique 31 peut aussi être un capteur à effet Hall.

A partir de la description qui vient d'être faite, plusieurs variantes de réalisation d'un procédé et système de mesure d'une vitesse et/ou d'une distance parcourue par un véhicule à au moins une roue, peuvent être conçues par l'homme du métier sans sortir du cadre de l'invention définie par les revendications. Plusieurs dispositifs portables peuvent être prévus dans le système de mesure. Chaque dispositif portable possède sa propre source d'énergie, telle qu'une batterie ou une cellule solaire ou autre source d'énergie. Le circuit de mesure et le ou les aimants permanents peuvent aussi être montés sur la roue arrière du vélo. Il peut aussi être prévu que les aimants soient intégrés dans la matière d'un ou des rayons de la roue, ou dans une portion de la jante de la roue.

## Revendications

1. Procédé de mesure d'une vitesse et/ou d'une distance parcourue par un vélo (10) lors de son utilisation par un utilisateur, au moyen d'au moins un aimant permanent (2) disposé sur une roue (11) du vélo et un circuit de mesure (3) à capteur magnétique (31) disposé sur une portion de cadre (13) ou une fourche (12) de montage de la roue libre de rotation, le circuit de mesure (3) étant disposé sur la portion de cadre (13) ou la fourche (12) à une même distance de l'axe de rotation de la roue (11) que l'aimant permanent (2) pour être en regard de l'aimant permanent (2) à son passage lors de la rotation de la roue (11),
**caractérisé en ce que** le procédé comprend des étapes de :
- mettre le vélo (10) en mouvement sur un chemin avec la roue (11) en rotation avec l'aimant permanent (2),
- détecter le passage de l'aimant permanent (2) en regard du capteur magnétique (31) du circuit de mesure (3) en générant une impulsion de tension induite à chaque passage de l'aimant permanent (2) en rotation,
- redresser la tension générée par le capteur magnétique (31) au moyen d'un redresseur (32) et en stockant la tension redressée sur un condensateur de lissage (C_{L}) pour alimenter le circuit de mesure (3),
- calculer une vitesse et/ou une distance parcourue du vélo (10) dans une unité de calcul (34), qui est cadencée par un oscillateur (33), sur la base des impulsions de tension induite reçues dans le temps du capteur magnétique (31) en connaissant la valeur du diamètre de la roue (11) du vélo (10), et
- transmettre sans fil une ou plusieurs mesures de vitesse et/ou de distance calculées dans l'unité de calcul (34) du circuit de mesure (3) à un dispositif portable (4) porté par l'utilisateur ou sur une partie du vélo (10) par une unité de transmission-réception de signaux (35) liée à une antenne (36) du circuit de mesure (3), une transmission directe de mesure de vitesse instantanée étant effectuée à destination du dispositif portable (4) pour afficher cette mesure de vitesse instantanée sur un élément d'affichage (48) du dispositif portable (4), et dès que le niveau de tension d'alimentation sur le condensateur de lissage (C_{L}) passe en dessous d'un premier seuil bas de tension d'alimentation, une désactivation de l'unité de transmission-réception de signaux (35) est effectuée, et **en ce qu'**avant que le niveau de tension d'alimentation sur le condensateur de lissage (C_{L}) passe en dessous d'un second seuil de tension d'alimentation inférieur au premier seuil bas, une mémorisation de différents calculs de vitesse et/ou de distance parcourue par le vélo (10) est effectuée dans une mémoire non volatile (37) du circuit de mesure (3).

2. Procédé de mesure d'une vitesse et/ou d'une distance parcourue par un vélo (10) lors de son utilisation par un utilisateur, au moyen d'au moins un aimant permanent (2) disposé sur une roue (11) du vélo (10) et un circuit de mesure (3) à capteur magnétique (31) disposé sur une portion de cadre (13) ou une fourche (12) de montage de la roue libre de rotation, le circuit de mesure (3) étant disposé sur la portion de cadre (13) ou la fourche (12) à une même distance de l'axe de rotation de la roue (11) que l'aimant permanent (2) pour être en regard de l'aimant permanent (2) à son passage lors de la rotation de la roue (11),
**caractérisé en ce que** le procédé comprend des étapes de :
- mettre le vélo (10) en mouvement sur un chemin avec la roue (11) en rotation avec l'aimant permanent (2),
- détecter le passage de l'aimant permanent (2) en regard du capteur magnétique (31) du circuit de mesure (3) en générant une impulsion de tension induite à chaque passage de l'aimant permanent (2) en rotation,
- redresser la tension générée par le capteur magnétique (31) au moyen d'un redresseur (32) et en stockant la tension redressée sur un condensateur de lissage (C_{L}) pour alimenter le circuit de mesure (3),
- déterminer des temps de passage de l'aimant permanent (2) en regard du capteur magnétique (31) dans une unité de calcul (34), qui est cadencée par un oscillateur (33), sur la base des impulsions de tension induite fournies par le capteur magnétique (31), et
- transmettre sans fil des données relatives aux temps de passage de l'aimant permanent (2) en regard du capteur magnétique (31) à un dispositif portable (4) porté par l'utilisateur ou sur une partie du vélo (10) par une unité de transmission-réception de signaux (35) liée à une antenne (36) du circuit de mesure (3) de manière à calculer dans une unité de traitement (44) du dispositif portable (4) une vitesse et/ou une distance parcourue du vélo (10), et dès que le niveau de tension d'alimentation sur le condensateur de lissage (C_{L}) passe en dessous d'un premier seuil bas de tension d'alimentation, une désactivation de l'unité de transmission-réception de signaux (35) est effectuée, et **en ce qu'**avant que le niveau de tension d'alimentation sur le condensateur de lissage (C_{L}) passe en dessous d'un second seuil de tension d'alimentation inférieur au premier seuil bas, une mémorisation des données de mesure est effectuée dans une mémoire non volatile (37) du circuit de mesure (3).

3. Procédé de mesure selon la revendication 1, **caractérisé en ce qu'**une distance parcourue par le vélo (10) sur une période de temps déterminée est calculée par intégration dans l'unité de calcul (34) du circuit de mesure (3), sur la base des impulsions de tension induite reçues dans le temps du capteur magnétique (31), et **en ce que** le dispositif portable (4) est agencé pour afficher une mesure de vitesse instantanée ou des mesures de vitesse et/ou de distance parcourue sur un élément d'affichage (48) du dispositif portable (4), ou pour signaler ces mesures à l'utilisateur par un signal audio par un élément audio (48') du dispositif portable (4).

4. Procédé de mesure selon la revendication 3, **caractérisé en ce qu'**une ou plusieurs mesures de distance parcourue est transmise sans fil au dispositif portable (4) en même temps que la ou les mesures de vitesse ou indépendamment,

5. Procédé de mesure selon la revendication 1, **caractérisé en ce que** dès qu'une mesure de la vitesse est déterminée dans l'unité de calcul (34), une transmission directe de cette mesure est effectuée à destination du dispositif portable (4) pour signaler cette mesure à l'utilisateur également par un signal audio par un élément audio (48') du dispositif portable (4).

6. Procédé de mesure selon la revendication 1, **caractérisé en ce qu'**une valeur maximale de vitesse ou une valeur moyenne de vitesse est déterminée dans l'unité de calcul (34) sur une période de temps déterminée et transmise à destination du dispositif portable (4) pour afficher cette valeur maximale ou moyenne de vitesse sur un élément d'affichage (48) du dispositif portable (4), ou pour signaler cette mesure à l'utilisateur par un signal audio par un élément audio (48') du dispositif portable (4).

7. Procédé de mesure selon la revendication 2, **caractérisé en ce qu'**une valeur maximale de vitesse ou une valeur moyenne de vitesse est déterminée dans l'unité de traitement (44) du dispositif portable (4) sur une période de temps déterminée pour afficher cette valeur maximale ou moyenne de vitesse sur un élément d'affichage (48) du dispositif portable (4), ou pour signaler cette mesure à l'utilisateur par un signal audio par un élément audio (48') du dispositif portable (4).

8. Procédé de mesure selon la revendication 1, **caractérisé en ce que** l'oscillateur (33) du circuit de mesure (3) est un oscillateur à quartz horloger pour cadencer l'unité de calcul (34) dans ces opérations de calcul de vitesse et/ou de distance parcourue par le vélo (10).

9. Procédé de mesure selon la revendication 1, **caractérisé en ce que** le circuit de mesure (3) comprend un inclinomètre (38) pour permettre par intégration de calculer dans l'unité de calcul (34), un dénivelé effectué par le vélo (10), qui est un vélo à deux roues en utilisation, ou une inclinaison latérale instantanée du vélo.

10. Procédé de mesure selon la revendication 9, **caractérisé en ce que** l'inclinomètre (38) est combiné à un baromètre (38') pour mesurer la pression atmosphérique.

11. Procédé de mesure selon la revendication 1, **caractérisé en ce qu'**une opération de calibration du diamètre de la roue (11) du vélo (10) et de l'angle de fixation du circuit de mesure (3) est effectuée initialement par une transmission de signaux de paramétrage (S_{RF}) depuis le dispositif portable (4) vers le circuit de mesure (3).

12. Procédé de mesure selon la revendication 2, **caractérisé en ce qu'**une opération de calibration du diamètre de la roue (11) du vélo (10) et de l'angle de fixation du circuit de mesure (3) est effectuée par le dispositif portable (4) sur la base de données brutes transmises par le circuit de mesure (3) et de valeurs mesurées en absolu ou sur un parcours calibré.

13. Procédé de mesure selon l'une des revendications 1 et 2, **caractérisé en ce que** le circuit de mesure (3) communique par des signaux radiofréquences (S_{RF}) de l'unité de transmission-réception (35) du type BLE en mode publicitaire avec le dispositif portable (4).

14. Procédé de mesure selon la revendication 1, **caractérisé en ce qu'**un signal audio d'une oreillette en tant que dispositif portable (4) est fourni à l'utilisateur pour l'informer notamment de la vitesse instantanée du vélo.

15. Système (1) de mesure d'une vitesse et/ou d'une distance parcourue par un vélo (10), convenant à la mise en œuvre du procédé de mesure selon la revendication 1, le système de mesure comprenant au moins un aimant permanent (2) disposé sur une roue (11) du vélo (10), un circuit de mesure (3) à capteur magnétique (31) disposé sur une portion de cadre (13) ou une fourche (12) de montage de la roue libre de rotation, le circuit de mesure (3) étant disposé sur la portion de cadre (13) ou la fourche (12) à une même distance de l'axe de rotation de la roue (11) que l'aimant permanent (2) pour être en regard de l'aimant permanent (2) à son passage lors de la rotation de la roue (11), et un dispositif portable (4) agencé pour communiquer sans fil des signaux radiofréquences avec le circuit de mesure (3),
**caractérisé en ce que** le circuit de mesure (3) comprend :
- un capteur magnétique (31) destiné à détecter le passage de l'aimant permanent (2) en rotation et à générer une impulsion de tension induite à chaque passage de l'aimant permanent (2),
- un redresseur (32) pour redresser la tension générée par le capteur magnétique (31) et un condensateur de lissage (C_{L}) pour stocker la tension redressée pour l'alimentation du circuit de mesure (3),
- une unité de calcul (34), qui est cadencée par un oscillateur (33), étant agencée pour calculer une vitesse et/ou une distance parcourue du vélo (10) sur la base des impulsions de tension induite reçues du capteur magnétique (31) en connaissant la valeur du diamètre de la roue (11) du vélo (10) ou pour déterminer des temps de passage de l'aimant permanent (2) en regard du capteur magnétique (31) sur la base des impulsions de tension induite fournies par le capteur magnétique (31), et
- une unité de transmission-réception (35) liée à une antenne (36) agencée pour transmettre une ou plusieurs mesures de vitesse et/ou de distance calculées dans l'unité de calcul (34) à un dispositif portable (4) porté par l'utilisateur ou sur une partie du vélo (10),
**en ce que** dès que le niveau de tension d'alimentation sur le condensateur de lissage (C_{L}) passe en dessous d'un premier seuil bas de tension d'alimentation, le circuit de mesure (3) est agencé pour effectuer une désactivation de l'unité de transmission-réception de signaux (35), et **en ce qu'**avant que le niveau de tension d'alimentation sur le condensateur de lissage (C_{L}) passe en dessous d'un second seuil de tension d'alimentation inférieur au premier seuil bas, le circuit de mesure (3) est agencé pour effectuer une mémorisation de différents calculs de vitesse et/ou de distance parcourue par le vélo (10) dans une mémoire non volatile (37) du circuit de mesure.

16. Système (1) de mesure d'une vitesse et/ou d'une distance parcourue par un vélo (10), convenant à la mise en œuvre du procédé de mesure selon la revendication 2, le système de mesure comprenant au moins un aimant permanent (2) disposé sur une roue (11) du vélo (10), un circuit de mesure (3) à capteur magnétique (31) disposé sur une portion de cadre (13) ou une fourche (12) de montage de la roue libre de rotation, le circuit de mesure (3) étant disposé sur la portion de cadre (13) ou la fourche (12) à une même distance de l'axe de rotation de la roue (11) que l'aimant permanent (2) pour être en regard de l'aimant permanent (2) à son passage lors de la rotation de la roue (11), et un dispositif portable (4) agencé pour communiquer sans fil des signaux radiofréquences avec le circuit de mesure (3),
**caractérisé en ce que** le circuit de mesure (3) comprend :
- un capteur magnétique (31) destiné à détecter le passage de l'aimant permanent (2) en rotation et à générer une impulsion de tension induite à chaque passage de l'aimant permanent (2),
- un redresseur (32) pour redresser la tension générée par le capteur magnétique (31) et un condensateur de lissage (C_{L}) pour stocker la tension redressée pour l'alimentation du circuit de mesure (3),
- une unité de calcul (34), qui est cadencée par un oscillateur (33), étant agencée pour déterminer des temps de passage de l'aimant permanent (2) en regard du capteur magnétique (31) sur la base des impulsions de tension induite fournies par le capteur magnétique (31), et
- une unité de transmission-réception (35) liée à une antenne (36) agencée pour transmettre sans fil des données relatives aux temps de passage de l'aimant permanent (2) en regard du capteur magnétique (31) à un dispositif portable (4) porté par l'utilisateur ou sur une partie du vélo (10), de manière à calculer dans une unité de traitement (44) du dispositif portable (4) une vitesse et/ou une distance parcourue du vélo (10), et
**en ce que** dès que le niveau de tension d'alimentation sur le condensateur de lissage (C_{L}) passe en dessous d'un premier seuil bas de tension d'alimentation, le circuit de mesure (3) est agencé pour effectuer une désactivation de l'unité de transmission-réception de signaux (35), et **en ce qu'**avant que le niveau de tension d'alimentation sur le condensateur de lissage (C_{L}) passe en dessous d'un second seuil de tension d'alimentation inférieur au premier seuil bas, le circuit de mesure (3) est agencé pour effectuer une mémorisation des données de mesure dans une mémoire non volatile (37) du circuit de mesure (3).

17. Système (1) de mesure selon l'une des revendications 15 et 16, pour lequel l'aimant permanent (2) est destiné à être placé sur un rayon (21) d'une roue avant (11) du vélo (10) le circuit de mesure (3) est destiné à être placé sur la fourche avant (12) du vélo, **caractérisé en ce que** le dispositif portable (4) est un téléphone portable ou une tablette électronique pour être porté par l'utilisateur ou fixé sur le guidon du vélo, et **en ce qu'**une ou des mesures effectuées dans le circuit de mesure (3) sont transmises par des signaux radiofréquences de type BLE (S_{RF}) au dispositif portable pour être affichées sur un élément d'affichage (48) ou signalées par un signal audio d'un élément audio (48') à un utilisateur du vélo.

18. Système (1) de mesure selon l'une des revendications 15 et 16, pour lequel il est prévu au moins deux aimants permanents (2) disposés chacun sur un rayon respectif de la roue (11) du vélo (10) les aimants permanents étant disposés à 180° l'un de l'autre.

19. Système (1) de mesure selon l'une des revendications 15 et 16, **caractérisé en ce que** le circuit de mesure (3) comprend un inclinomètre (38) et/ou un baromètre (38'), qui sont destinés à être calibrés par des paramètres transmis par le dispositif portable (4), ou qui sont destinés à être calibrés directement par le dispositif portable (4).

## Patentansprüche

1. Verfahren zum Messen einer Geschwindigkeit und/oder einer zurückgelegten Distanz eines Fahrrades (10), während seiner Anwendung durch einen Benutzer, mittels mindestens einem Permanentmagnet (2), der an einem Rad (11) des Fahrrades angeordnet ist, und einer Messschaltung (3) mit Magnetsensor (31), die an einem Bereich des Rahmens (13) oder einer Gabel (12) zur Montage des Rades in freier Drehung angeordnet ist, wobei die Messschaltung (3) am Bereich des Rahmens (13) oder der Gabel (12) in einer gleichen Distanz von der Drehachse des Rades (11) angeordnet ist wie der Permanentmagnet (2), um gegenüber dem Permanentmagnet (2) zu sein, bei seinem Durchlauf während der Drehung des Rades (11), **dadurch gekennzeichnet, dass** das Verfahren die Schritte umfasst:
- das Fahrrad (10) auf einem Weg in Bewegung setzen, wobei sich das Rad (11) mit dem Permanentmagnet (2) dreht,
- Erkennen des Durchlaufs des Permanentmagneten (2) gegenüber dem Magnetsensor (31) der Messschaltung (3) durch Erzeugen eines induzierten Spannungsimpulses bei jedem Durchlauf des sich drehenden Permanentmagneten (2),
- Gleichrichten der durch den Magnetsensor (31) erzeugten Spannung mittels einem Gleichrichter (32) und Speichern der gleichgerichteten Spannung auf einem Glättungskondensator (C_{L}), um die Messschaltung (3) zu versorgen,
- Berechnen einer Geschwindigkeit und/oder einer zurückgelegten Distanz des Fahrrades (10) in einer Recheneinheit (34), die von einem Oszillator (33) getaktet wird, auf der Grundlage der vom Magnetsensor (31) zeitlich empfangenen induzierten Spannungsimpulse, wobei der Wert des Durchmessers des Rades (11) des Fahrrades (10) bekannt ist, und
- drahtloses Übertragen einer oder mehrerer Geschwindigkeits- und/oder Distanzmessungen, die in der Recheneinheit (34) der Messschaltung (3) berechnet wurden, an eine vom Benutzer oder von einem Teil des Fahrrades (10) getragene tragbare Vorrichtung (4), durch eine Signal-Sende-Empfangseinheit (35), die mit einer Antenne (36) der Messschaltung (3) verbunden ist, wobei eine direkte Sendung der momentanen Geschwindigkeitsmessung an die tragbare Vorrichtung (4) durchgeführt wird, um diese momentane Geschwindigkeitsmessung auf einem Anzeigeelement (48) der tragbaren Vorrichtung (4) anzuzeigen, und sobald das Niveau der Versorgungsspannung auf dem Glättungskondensator (C_{L}) unter einen ersten unteren Schwellenwert der Versorgungsspannung fällt, wird eine Deaktivierung der Signal-Sende-Empfangseinheit (35) durchgeführt, und dass, bevor das Niveau der Versorgungsspannung auf dem Glättungskondensator (C_{L}) unter einen zweiten Schwellenwert der Versorgungsspannung fällt, der tiefer ist als der erste untere Schwellenwert, eine Speicherung von unterschiedlichen Berechnungen der Geschwindigkeit und/oder der mit dem Fahrrad (10) zurückgelegten Distanz in einem nichtflüchtigen Speicher (37) der Messschaltung (3) durchgeführt wird.

2. Verfahren zum Messen einer Geschwindigkeit und/oder einer zurückgelegten Distanz eines Fahrrades (10), während seiner Anwendung durch einen Benutzer, mittels mindestens einem Permanentmagnet (2), der an einem Rad (11) des Fahrrades (10) angeordnet ist, und einer Messschaltung (3) mit Magnetsensor (31), die an einem Bereich des Rahmens (13) oder einer Gabel (12) zur Montage des Rades in freier Drehung angeordnet ist, wobei die Messschaltung (3) im Bereich des Rahmens (13) oder der Gabel (12) in einer gleichen Distanz von der Drehachse des Rades (11) angeordnet ist wie der Permanentmagnet (2), um gegenüber dem Permanentmagnet (2) zu sein, bei seinem Durchlauf während der Drehung des Rades (11),
**dadurch gekennzeichnet, dass** das Verfahren die Schritte umfasst:
- das Fahrrad (10) auf einem Weg in Bewegung setzen, wobei sich das Rad (11) mit dem Permanentmagnet (2) dreht,
- Erkennen des Durchlaufs des Permanentmagneten (2) gegenüber dem Magnetsensor (31) der Messschaltung (3) durch Erzeugen eines induzierten Spannungsimpulses bei jedem Durchlauf des sich drehenden Permanentmagneten (2),
- Gleichrichten der durch den Magnetsensor (31) erzeugten Spannung mittels einem Gleichrichter (32) und Speichern der gleichgerichteten Spannung auf einem Glättungskondensator (C_{L}), um die Messschaltung (3) zu versorgen,
- Bestimmen von Durchlaufzeiten des Permanentmagneten (2) gegenüber dem Magnetsensor (31) in einer Recheneinheit (34), die von einem Oszillator (33) getaktet wird, auf der Grundlage der vom Magnetsensor (31) bereitgestellten induzierten Spannungsimpulse, und
- drahtloses Übertragen von Daten bezüglich den Durchlaufzeiten des Permanentmagneten (2) gegenüber dem Magnetsensor (31), an eine vom Benutzer oder von einem Teil des Fahrrades (10) getragene tragbare Vorrichtung (4), durch eine Signal-Sende-Empfangseinheit (35), die mit einer Antenne (36) der Messschaltung (3) verbunden ist, um in einer Verarbeitungseinheit (44) der tragbaren Vorrichtung (4) eine Geschwindigkeit und/oder eine zurückgelegte Distanz des Fahrrades (10) zu berechnen, und sobald das Niveau der Versorgungsspannung auf dem Glättungskondensator (C_{L}) unter einen ersten unteren Schwellenwert der Versorgungsspannung fällt, wird eine Deaktivierung der Signal-Sende-Empfangseinheit (35) durchgeführt, und dass, bevor das Niveau der Versorgungsspannung auf dem Glättungskondensator (C_{L}) unter einen zweiten Schwellenwert der Versorgungsspannung fällt, der tiefer ist als der erste untere Schwellenwert, eine Speicherung der Messdaten in einem nichtflüchtigen Speicher (37) der Messschaltung (3) durchgeführt wird.

3. Messverfahren nach Anspruch 1, **dadurch gekennzeichnet, dass** eine Distanz, die das Fahrrad (10) über einen bestimmten Zeitraum zurückgelegt hat, durch Integration in die Recheneinheit (34) der Messschaltung (3) berechnet wird, auf der Grundlage der vom Magnetsensor (31) zeitlich empfangenen induzierten Spannungsimpulse, und dass die tragbare Vorrichtung (4) eingerichtet ist, um eine momentane Geschwindigkeitsmessung oder Messungen der Geschwindigkeit und/oder der zurückgelegten Distanz auf einem Anzeigeelement (48) der tragbaren Vorrichtung (4) anzuzeigen, oder um diese Messungen dem Benutzer durch ein Audiosignal eines Audioelements (48') der tragbaren Vorrichtung (4) zu signalisieren.

4. Messverfahren nach Anspruch 3, **dadurch gekennzeichnet, dass** eine oder mehrere Messungen der zurückgelegten Distanz drahtlos an die tragbare Vorrichtung (4) gesendet werden, gleichzeitig mit der oder den Geschwindigkeitsmessungen oder unabhängig.

5. Messverfahren nach Anspruch 1, **dadurch gekennzeichnet, dass**, sobald eine Geschwindigkeitsmessung in der Recheneinheit (34) bestimmt wird, eine direkte Sendung dieser Messung an die tragbare Vorrichtung (4) durchgeführt wird, um diese Messung dem Benutzer auch durch ein Audiosignal eines Audioelements (48') der tragbaren Vorrichtung (4) zu signalisieren.

6. Messverfahren nach Anspruch 1, **dadurch gekennzeichnet, dass** ein Höchstwert der Geschwindigkeit oder ein Mittelwert der Geschwindigkeit über einen bestimmten Zeitraum in der Recheneinheit (34) bestimmt wird und an die tragbare Vorrichtung (4) gesendet wird, um diesen Höchst- oder Mittelwert der Geschwindigkeit auf einem Anzeigeelement (48) der tragbaren Vorrichtung (4) anzuzeigen, oder um diese Messung dem Benutzer durch ein Audiosignal eines Audioelements (48') der tragbaren Vorrichtung (4) zu signalisieren.

7. Messverfahren nach Anspruch 2, **dadurch gekennzeichnet, dass** ein Höchstwert der Geschwindigkeit oder ein Mittelwert der Geschwindigkeit über einen bestimmten Zeitraum in der Verarbeitungseinheit (44) der tragbaren Vorrichtung (4) bestimmt wird, um diesen Höchst- oder Mittelwert der Geschwindigkeit auf einem Anzeigeelement (48) der tragbaren Vorrichtung (4) anzuzeigen, oder um diese Messung dem Benutzer durch ein Audiosignal eines Audioelements (48') der tragbaren Vorrichtung (4) zu signalisieren.

8. Messverfahren nach Anspruch 1, **dadurch gekennzeichnet, dass** der Oszillator (33) der Messschaltung (3) ein Uhrenquarz-Oszillator ist, um die Recheneinheit (34) bei diesen Vorgängen für die Berechnung der Geschwindigkeit und/oder der vom Fahrrad (10) zurückgelegte Distanz zu takten.

9. Messverfahren nach Anspruch 1, **dadurch gekennzeichnet, dass** die Messschaltung (3) einen Neigungsmesser (38) umfasst, um durch Integration die Berechnung eines Höhenunterschieds in der Recheneinheit (34) zu ermöglichen, der durch das Fahrrad (10) durchgeführt wurde, das ein zweirädriges Fahrrad in Anwendung ist, oder eine momentane seitliche Neigung des Fahrrades.

10. Messverfahren nach Anspruch 9, **dadurch gekennzeichnet, dass** der Neigungsmesser (38) mit einem Barometer (38') zur Messung des atmosphärischen Drucks kombiniert ist.

11. Messverfahren nach Anspruch 1, **dadurch gekennzeichnet, dass** ein Vorgang der Kalibrierung des Durchmessers des Rades (11) des Fahrrades (10) und des Befestigungswinkels der Messschaltung (3) anfänglich durch eine Sendung von Parametersignalen (S_{RF}) von der tragbaren Vorrichtung (4) an die Messschaltung (3) durchgeführt wird.

12. Messverfahren nach Anspruch 2, **dadurch gekennzeichnet, dass** ein Vorgang der Kalibrierung des Durchmessers des Rades (11) des Fahrrades (10) und des Befestigungswinkels der Messschaltung (3) durch die tragbare Vorrichtung (4) auf der Grundlage von von der Messschaltung (3) gesendeten Rohdaten und von Werten, die absolut oder auf einer kalibrierten Strecke gemessenen werden, durchgeführt wird.

13. Messverfahren nach einem der Ansprüche 1 und 2, **dadurch gekennzeichnet, dass** die Messschaltung (3) über Hochfrequenzsignale (S_{RF}) der Sende-Empfangseinheit (35) vom Typ BLE im publizistischen Modus mit der tragbaren Vorrichtung (4) kommuniziert.

14. Messverfahren nach Anspruch 1, **dadurch gekennzeichnet, dass** dem Benutzer ein Audiosignal eines Headsets, in der Eigenschaft einer tragbaren Vorrichtung (4), bereitgestellt wird, um ihn insbesondere über die momentane Geschwindigkeit des Fahrrades zu informieren.

15. System (1) zum Messen einer Geschwindigkeit und/oder einer zurückgelegten Distanz eines Fahrrades (10), geeignet für die Durchführung des Messverfahrens nach Anspruch 1, wobei das Messsystem mindestens einen Permanentmagnet (2) umfasst, der an einem Rad (11) des Fahrrades (10) angeordnet ist, eine Messschaltung (3) mit Magnetsensor (31), die an einem Bereich des Rahmens (13) oder einer Gabel (12) zur Montage des Rades in freier Drehung angeordnet ist, wobei die Messschaltung (3) am Bereich des Rahmens (13) oder der Gabel (12) in einer gleichen Distanz von der Drehachse des Rades (11) angeordnet ist wie der Permanentmagnet (2), um gegenüber dem Permanentmagnet (2) zu sein, bei seinem Durchlauf während der Drehung des Rades (11), und eine tragbare Vorrichtung (4), die eingerichtet ist, um Hochfrequenzsignale drahtlos mit der Messschaltung (3) zu kommunizieren,
**dadurch gekennzeichnet, dass** die Messschaltung (3) umfasst:
- einen Magnetsensor (31), der vorgesehen ist zum Erkennen des Durchlaufs des sich drehenden Permanentmagneten (2) und zur Erzeugung eines induzierten Spannungsimpulses bei jedem Durchlauf des Permanentmagneten (2),
- einen Gleichrichter (32) zum Gleichrichten der durch den Magnetsensor (31) erzeugten Spannung und einen Glättungskondensator (C_{L}) zum Speichern der gleichgerichteten Spannung zur Versorgung der Messschaltung (3),
- eine Recheneinheit (34), die von einem Oszillator (33) getaktet wird, eingerichtet, um eine Geschwindigkeit und/oder eine zurückgelegte Distanz des Fahrrades (10) auf der Grundlage der vom Magnetsensor (31) empfangenen induzierten Spannungsimpulse zu berechnen, wobei der Wert des Durchmessers des Rades (11) des Fahrrades (10) bekannt ist oder um Durchlaufzeiten des Permanentmagneten (2) gegenüber dem Magnetsensor (31) zu bestimmen, auf der Grundlage der vom Magnetsensor (31) bereitgestellten induzierten Spannungsimpulse, und
- eine Sende-Empfangseinheit (35), die mit einer Antenne (36) verbunden ist, eingerichtet, um eine oder mehrere in der Recheneinheit (34) berechnete Geschwindigkeits- und/oder Distanzmessungen an eine vom Benutzer oder von einem Teil des Fahrrades (10) getragene tragbare Vorrichtung (4) zu übertragen,
dass, sobald das Niveau der Versorgungsspannung auf dem Glättungskondensator (C_{L}) unter einen ersten unteren Schwellenwert der Versorgungsspannung fällt, die Messschaltung (3) eingerichtet ist, um eine Deaktivierung der Signal-Sende-Empfangseinheit (35) durchzuführen, und dass, bevor das Niveau der Versorgungsspannung auf dem Glättungskondensator (C_{L}) unter einen zweiten Schwellenwert der Versorgungsspannung fällt, der tiefer ist als der erste untere Schwellenwert, die Messschaltung (3) eingerichtet ist, um eine Speicherung von unterschiedlichen Berechnungen der Geschwindigkeit und/oder der mit dem Fahrrad (10) zurückgelegten Distanz in einem nichtflüchtigen Speicher (37) der Messschaltung durchzuführen.

16. System (1) zum Messen einer Geschwindigkeit und/oder einer zurückgelegten Distanz eines Fahrrades (10), geeignet für die Durchführung des Messverfahrens nach Anspruch 2, wobei das Messsystem mindestens einen Permanentmagnet (2) umfasst, der an einem Rad (11) des Fahrrades (10) angeordnet ist, eine Messschaltung (3) mit Magnetsensor (31), die an einem Bereich des Rahmens (13) oder einer Gabel (12) zur Montage des Rades in freier Drehung angeordnet ist, wobei die Messschaltung (3) am Bereich des Rahmens (13) oder der Gabel (12) in einer gleichen Distanz von der Drehachse des Rades (11) angeordnet ist wie der Permanentmagnet (2), um gegenüber dem Permanentmagnet (2) zu sein, bei seinem Durchlauf während der Drehung des Rades (11), und eine tragbare Vorrichtung (4), die eingerichtet ist, um Hochfrequenzsignale drahtlos mit der Messschaltung (3) zu kommunizieren,
**dadurch gekennzeichnet, dass** die Messschaltung (3) umfasst:
- einen Magnetsensor (31), der vorgesehen ist zum Erkennen des Durchlaufs des sich drehenden Permanentmagneten (2) und zur Erzeugung eines induzierten Spannungsimpulses bei jedem Durchlauf des Permanentmagneten (2),
- einen Gleichrichter (32) zum Gleichrichten der durch den Magnetsensor (31) erzeugten Spannung und einen Glättungskondensator (C_{L}) zum Speichern der gleichgerichteten Spannung zur Versorgung der Messschaltung (3),
- eine Recheneinheit (34), die von einem Oszillator (33) getaktet wird, eingerichtet, um Durchlaufzeiten des Permanentmagneten (2) gegenüber dem Magnetsensor (31) zu bestimmen, auf der Grundlage der vom Magnetsensor (31) bereitgestellten induzierten Spannungsimpulse, und
- eine Sende-Empfangseinheit (35), die mit einer Antenne (36) verbunden ist, eingerichtet, um Daten bezüglich den Durchlaufzeiten des Permanentmagneten (2) gegenüber dem Magnetsensor (31) an eine vom Benutzer oder von einem Teil des Fahrrades (10) getragene tragbare Vorrichtung (4) drahtlos zu übertragen, um in einer Verarbeitungseinheit (44) der tragbaren Vorrichtung (4) eine Geschwindigkeit und/oder eine zurückgelegte Distanz des Fahrrades (10) zu berechnen, und
dass, sobald das Niveau der Versorgungsspannung auf dem Glättungskondensator (C_{L}) unter einen ersten unteren Schwellenwert der Versorgungsspannung fällt, die Messschaltung (3) eingerichtet ist, um eine Deaktivierung der Signal-Sende-Empfangseinheit (35) durchzuführen, und dass, bevor das Niveau der Versorgungsspannung auf dem Glättungskondensator (C_{L}) unter einen zweiten Schwellenwert der Versorgungsspannung fällt, der tiefer ist als der erste untere Schwellenwert, die Messschaltung (3) eingerichtet ist, um eine Speicherung der Messdaten in einem nichtflüchtigen Speicher (37) der Messschaltung (3) durchzuführen.

17. Messsystem (1) nach einem der Ansprüche 15 und 16, wobei der Permanentmagnet (2) vorgesehen ist, um an einer Speiche (21) eines Vorderrades (11) des Fahrrades (10) angebracht zu werden und die Messschaltung (3) vorgesehen ist, um an der Vordergabel (12) des Fahrrades angebracht zu werden, **dadurch gekennzeichnet, dass** die tragbare Vorrichtung (4) ein Mobiltelefon oder ein Tabletcomputer ist, der vom Benutzer oder von der Lenkstange des Fahrrades getragen wird, und dass eine oder die Messungen, die in der Messschaltung (3) durchgeführt werden, durch Hochfrequenzsignale vom Typ BLE (S_{RF}) an die tragbare Vorrichtung gesendet werden, um auf einem Anzeigeelement (48) angezeigt zu werden oder durch ein Audiosignal eines Audioelements (48') an einen Benutzer des Fahrrades signalisiert zu werden.

18. Messsystem (1) nach einem der Ansprüche 15 und 16, wobei mindestens zwei Permanentmagnete (2) eingeplant sind, die jeweils an einer jeweiligen Speiche des Rades (11) des Fahrrades (10) angeordnet sind, wobei die Permanentmagnete mit 180° zueinander angeordnet sind.

19. Messsystem (1) nach einem der Ansprüche 15 und 16, **dadurch gekennzeichnet, dass** die Messschaltung (3) einen Neigungsmesser (38) und/oder ein Barometer (38') umfasst, die zur Kalibrierung durch von der tragbaren Vorrichtung (4) gesendete Parameter vorgesehen sind, oder die zur direkten Kalibrierung durch die tragbare Vorrichtung (4) vorgesehen sind.

## Claims

1. Method for measuring a speed and/or a distance travelled by a bicycle (10) while it is being used by a user, by means of at least one permanent magnet (2) placed on a wheel (11) of the bicycle and a measurement circuit (3) comprising a magnetic sensor (31) placed on a frame portion (13) or a fork (12) for mounting the rotation freewheel, the measurement circuit (3) being placed on the frame portion (13) or the fork (12) at the same distance from the axis of rotation of the wheel (11) as the permanent magnet (2) to be facing the permanent magnet (2) as it passes during rotation of the wheel (11),
**characterised in that** the method comprises steps of:
- moving the bicycle (10) on a path with the wheel (11) rotating with the permanent magnet (2),
- detecting the passage of the permanent magnet (2) facing the magnetic sensor (31) of the measurement circuit (3) by generating an induced-voltage pulse each time the permanent magnet (2) rotates,
- rectifying the voltage generated by the magnetic sensor (31) by means of a rectifier (32) and by storing the rectified voltage on a smoothing capacitor (C_{L}) to power the measurement circuit (3),
- computing a speed and/or a travelled distance of the bicycle (10) in a computing unit (34), which is clocked by an oscillator (33), based on the induced-voltage pulses received over time from the magnetic sensor (31) and in light of the value of the diameter of the bicycle (10) wheel (11), and
- wirelessly transmitting one or more speed and/or distance measurements computed in the computing unit (34) of the measurement circuit (3) to a mobile device (4) carried by the user or on a part of the bicycle (10) by a signal transmission-reception unit (35) connected to an antenna (36) of the measurement circuit (3), a direct transmission of instantaneous speed measurement to the mobile device (4) being carried out to display this instantaneous speed measurement on a display element (48) of the mobile device (4), and as soon as the power supply voltage level on the smoothing capacitor (C_{L}) falls below a first low power supply voltage threshold, a deactivation of the signal transmission-reception unit (35) is performed, and **in that** before the power supply voltage level on the smoothing capacitor (C_{L}) falls below a second power supply voltage threshold lower than the first low threshold, a memorisation of the different computations of speed and/or distance travelled by the bicycle (10) are performed in a non-volatile memory (37) of the measurement circuit (3).

2. Method for measuring a speed and/or a distance travelled by a bicycle (10) while it is being used by a user, by means of at least one permanent magnet (2) placed on a bicycle (10) wheel (11) and a measurement circuit (3) comprising a magnetic sensor (31) placed on a frame portion (13) or a fork (12) for mounting the rotation freewheel, the measurement circuit (3) being placed on the frame portion (13) or the fork (12) at the same distance from the axis of rotation of the wheel (11) as the permanent magnet (2) to be facing the permanent magnet (2) as it passes during rotation of the wheel (11),
**characterised in that** the method comprises steps of:
- moving the bicycle (10) on a path with the wheel (11) rotating with the permanent magnet (2),
- detecting the passage of the permanent magnet (2) facing the magnetic sensor (31) of the measurement circuit (3) by generating an induced-voltage pulse each time the permanent magnet (2) rotates,
- rectifying the voltage generated by the magnetic sensor (31) by means of a rectifier (32) and by storing the rectified voltage on a smoothing capacitor (C_{L}) to power supply the measurement circuit (3),
- determining passage times of the permanent magnet (2) facing the magnetic sensor (31) in a computing unit (34), which is clocked by an oscillator (33), based on the induced-voltage pulses supplied by the magnetic sensor (31), and
- wirelessly transmitting data relating to the passage times of the permanent magnet (2) facing the magnetic sensor (31) to a mobile device (4) carried by the user or on a part of the bicycle (10) by a signal transmission-reception unit (35) connected to an antenna (36) of the measurement circuit (3) so as to compute in a processing unit (44) of the mobile device (4) a speed and/or a distance travelled by the bicycle (10), and as soon as the power supply voltage level on the smoothing capacitor (C_{L}) falls below a first low power supply voltage threshold, a deactivation of the signal transmission-reception unit (35) is performed, and **in that** before the power supply voltage level on the smoothing capacitor (C_{L}) falls below a second power supply voltage threshold lower than the first low threshold, a memorisation of the measurement data is carried out in a non-volatile memory (37) of the measurement circuit (3).

3. Measurement method according to claim 1, **characterised in that** a distance travelled by the bicycle (10) over a determined period of time is computed by integration in the computing unit (34) of the measurement circuit (3) , based on the induced-voltage pulses received over time from the magnetic sensor (31), and **in that** the mobile device (4) is arranged to display an instantaneous speed measurement or measurements of speed and/or distance travelled on a display element (48) of the mobile device (4), or to signal these measurements to the user by an audio signal by an audio element (48') of the mobile device (4).

4. Measurement method according to claim 3, **characterised in that** one or more measurements of distance travelled is wirelessly transmitted to the mobile device (4) at the same time as the speed measurement(s) or independently,

5. Measurement method according to claim 1, **characterised in that** as soon as a measurement of the speed is determined in the computing unit (34), a direct transmission of this measurement to the mobile device (4) is carried out to signal this measurement to the user also by an audio signal by an audio element (48') of the mobile device (4).

6. Measurement method according to claim 1, **characterised in that** a maximum speed value or an average speed value is determined in the computing unit (34) over a determined period of time and transmitted to the mobile device (4) to display this maximum or average speed value on a display element (48) of the mobile device (4), or to signal this measurement to the user by an audio signal by an audio element (48') of the mobile device (4).

7. Measurement method according to claim 2, **characterised in that** a maximum speed value or an average speed value is determined in the processing unit (44) of the mobile device (4) over a determined period of time for displaying this maximum or average speed value on a display element (48) of the mobile device (4), or to signal this measurement to the user by an audio signal by an audio element (48') of the mobile device (4).

8. Measurement method according to claim 1, **characterised in that** the oscillator (33) of the measurement circuit (3) is a timepiece quartz oscillator for clocking the computing unit (34) in these operations of computing the speed and/or distance travelled by the bicycle (10).

9. Measurement method according to claim 1, **characterised in that** the measurement circuit (3) comprises an inclinometer (38) to allow by integration to compute in the computing unit (34), a height difference made by the bicycle (10), which is a two-wheeled bicycle in use, or an instant sideways tilt of the bicycle.

10. Measurement method according to claim 9, **characterised in that** the inclinometer (38) is combined with a barometer (38') to measure the atmospheric pressure.

11. Measurement method according to claim 1, **characterised in that** an operation of calibrating the diameter of the bicycle (10) wheel (11) and the fixing angle of the measurement circuit (3) is carried out initially by a transmission of setting signals (S_{RF}) from the mobile device (4) to the measurement circuit (3).

12. Measurement method according to claim 2, **characterised in that** an operation of calibrating the diameter of the bicycle (10) wheel (11) and the fixing angle of the measurement circuit (3) is carried out by the mobile device (4) based on raw data transmitted by the measurement circuit (3) and values measured in absolute terms or on a calibrated path.

13. Measurement method according to one of claims 1 and 2, **characterised in that** the measurement circuit (3) communicates by radiofrequency signals (S_{RF}) from the transmission-reception unit (35) of the BLE type in advertisement mode with the mobile device (4).

14. Measurement method according to claim 1, **characterised in that** an audio signal of an earpiece as a mobile device (4) is supplied to the user to inform him in particular of the instantaneous speed of the bicycle.

15. System (1) for measuring a speed and/or a distance travelled by a bicycle (10), suitable for implementing the measuring method according to claim 1, the measuring system comprising at least one permanent magnet (2) placed on a bicycle (10) wheel (11), a measurement circuit (3) comprising a magnetic sensor (31) placed on a frame portion (13) or a fork (12) for mounting the rotation freewheel, the measurement circuit (3) being placed on the frame portion (13) or the fork (12) at the same distance from the axis of rotation of the wheel (11) as the permanent magnet (2) to be facing the permanent magnet (2) as it passes during rotation of the wheel (11), and a mobile device (4) arranged to wirelessly communicate radiofrequency signals with the measurement circuit (3),
**characterised in that** the measurement circuit (3) comprises:
- a magnetic sensor (31) intended to detect the passage of the permanent magnet (2) in rotation and to generate an induced-voltage pulse each time the permanent magnet (2) passes,
- a rectifier (32) to rectify the voltage generated by the magnetic sensor (31) and a smoothing capacitor (C_{L}) to store the rectified voltage for powering the measurement circuit (3),
- a computing unit (34), which is clocked by an oscillator (33), being arranged to compute a speed and/or a distance travelled of the bicycle (10) based on the induced-voltage pulses received from the magnetic sensor (31) and in light of the value of the diameter of the bicycle (10) wheel (11) or to determine passage times of the permanent magnet (2) facing the magnetic sensor (31) based on the induced-voltage pulses provided by the magnetic sensor (31), and
- a transmission-reception unit (35) connected to an antenna (36) arranged to transmit one or more speed and/or distance measurements computed in the computing unit (34) to a mobile device (4) carried by the user or on a part of the bicycle (10),
**in that** as soon as the power supply voltage level on the smoothing capacitor (C_{L}) falls below a first low power supply voltage threshold, the measurement circuit (3) is arranged to perform a deactivation of the signal transmission-reception unit (35), and **in that** before the power supply voltage level on the smoothing capacitor (C_{L}) falls below a second power supply voltage threshold lower than the first low threshold, the measurement circuit (3) is arranged to perform a memorisation of various computations of speed and/or distance travelled by the bicycle (10) in a non-volatile memory (37) of the measurement circuit.

16. System (1) for measuring a speed and/or a distance travelled by a bicycle (10), suitable for implementing the measuring method according to claim 2, the measuring system comprising at least one permanent magnet (2) placed on a bicycle (10) wheel (11), a measurement circuit (3) comprising a magnetic sensor (31) placed on a frame portion (13) or a fork (12) for mounting the rotation freewheel, the measurement circuit (3) being placed on the frame portion (13) or the fork (12) at the same distance from the axis of rotation of the wheel (11) as the permanent magnet (2) to be facing the permanent magnet (2) as it passes during rotation of the wheel (11), and a mobile device (4) arranged to wirelessly communicate radiofrequency signals with the measurement circuit (3),
**characterised in that** the measurement circuit (3) comprises:
- a magnetic sensor (31) intended to detect the passage of the permanent magnet (2) in rotation and to generate an induced-voltage pulse each time the permanent magnet (2) passes,
- a rectifier (32) to rectify the voltage generated by the magnetic sensor (31) and a smoothing capacitor (C_{L}) to store the rectified voltage for powering the measurement circuit (3),
- a computing unit (34), which is clocked by an oscillator (33), being arranged to determine passage times of the permanent magnet (2) facing the magnetic sensor (31) based on the voltage pulses induced by the magnetic sensor (31), and
- a transmission-reception unit (35) connected to an antenna (36) arranged to wirelessly transmit data relating to the passage times of the permanent magnet (2) facing the magnetic sensor (31) to a mobile device (4) carried by the user or on a part of the bicycle (10), so as to compute in a processing unit (44) of the mobile device (4) a speed and/or a distance travelled by the bicycle (10), and
**in that** as soon as the power supply voltage level on the smoothing capacitor (C_{L}) falls below a first low power supply voltage threshold, the measurement circuit (3) is arranged to perform a deactivation of the signal transmission-reception unit (35), and **in that** before the power supply voltage level on the smoothing capacitor (C_{L}) falls below a second power supply voltage threshold lower than the first low threshold, the measurement circuit (3) is arranged to perform a memorisation of the measurement data in a non-volatile memory (37) of the measurement circuit (3).

17. Measurement system (1) according to one of claims 15 and 16, for which the permanent magnet (2) is intended to be placed on a spoke (21) of a front wheel (11) of the bicycle (10) the measurement circuit (3) is intended to be placed on the front fork (12) of the bicycle, **characterised in that** the mobile device (4) is a mobile phone or an electronic tablet to be carried by the user or fixed on the handlebars of the bicycle, and **in that** one or more measurements taken in the measurement circuit (3) are transmitted by BLE type radiofrequency signals (S_{RF}) to the mobile device in order to be displayed on a display element (48) or signalled by an audio signal of an audio element (48') to a user of the bicycle.

18. Measurement system (1) according to one of claims 15 and 16, for which provision is made of at least two permanent magnets (2) each placed on a respective spoke of the bicycle (10) wheel (11) the permanent magnets being placed at 180° from each other.

19. Measurement system (1) according to one of claims 15 and 16, **characterised in that** the measurement circuit (3) comprises an inclinometer (38) and/or a barometer (38'), which are intended to be calibrated by parameters transmitted by the mobile device (4), or which are intended to be calibrated directly by the mobile device (4).
